# EUROPEAN PATENT APPLICATION

(11) **EP 1 750 316 A1**
(43) Date of publication of application: **07.02.2007**
(21) Application number: 04802568.8
(22) Date of filing: 29.12.2004
(51) Int. Cl.: H01M 4/42, H01M 6/06

(54) **NEGATIVE ELECTRODE OF DRY BATTERY, MANUFACTURE METHOD OF THE SAME, AND ZINC-MANGANESE DRY BATTERY USING THE SAME**

(30) Priority: 05.11.2004 CN 200410092003
(71) Applicant: Chung Pak Battery Works Ltd.,, Kowloon, Hong Kong (CN)
(72) Inventor: YE, Jinhua 7/F, Chung Pak Commercial Bldg., Kowloon Hong Kong (CN)
(74) Representative: Kramer - Barske - Schmidtchen
(86) International application number: PCT/CN2004/001556
(87) International publication number: WO 2006/047917

(57) **Abstract**

The present invention relates to dry cells, it discloses a negative electrode body for dry cells, comprising (by weight): 0.0005~0.010% magnesium; 0.001~0.005% indium or 0.0005~0.005% tin; 0~0.004% lead; 0~0.0005% cadmium; the rest being zinc. It also discloses the preparing method of said negative electrode body for dry cells. It further discloses a Zn/MnO₂ dry cell, including said negative electrode body of the present invention, on the inner surface of which places a coated paper, the outer of which are PVC sheath and iron shell. Inside the coated paper there are powdery bobbin and carbon rod, there is bobbin washer over the powdery bobbin, on the bottom side of the Zn/MnO₂ dry cell there are bottom cap and bottom seal, and on the upper side of it there are rubber plug, top cap and upper seal. It is necessary to add lead and cadmium for the preparation of the prior art zinc can used for the negative electrode body of Zn/MnO₂ dry cell, whereas metal indium or tin is added in place of lead and cadmium for the preparation of the zinc can of the present invention. Compared with prior arts, an advantage of the Zn/MnO₂ dry cells of the present invention is that they are free of lead and cadmium, the preparing process without the addition of lead and cadmium does not lead to environmental pollution, and meets the requirements of environmental protection.

## Description

### FIELD OF THE INVENTION

The present invention relates to dry cells, particularly to a negative electrode body for Zn/MnO₂ dry cells, its preparing method, and Zn/MnO₂ dry cells using it thereof.

### BACKGROUND OF THE INVENTION

The negative electrode body of the commonly used Zn/MnO₂ dry cell is a zinc can. In order to improve the ductility and strength of zinc metal, it is necessary to add 0.3-0.5% lead (Pb), 0.001-0.004% cadmium (Cd) and 0.0005-0.0030% magnesium (Mg) during zinc casting. Lead and cadmium are heavy metals, their uses being restricted by international environmental protection organizations, so, it is necessary to obtain Zn/MnO₂ dry cells, which are free of lead and cadmium for the purpose of environmental protection.

### SUMMARY OF THE INVENTION

This invention provides a negative electrode body of dry cells, which is fabricated without the addition of lead and cadmium.

This invention also provides a method for preparing said negative electrode body of dry cells.

Another object of this invention is to provide a Zn/MnO₂ dry cell using said negative electrode body.

To achieve the object of the present invention, the negative electrode body of dry cells comprises (by weight):
0.0005~0.010% magnesium;
0.001~0.005% indium or 0.0005~0.005% tin;
0~0.004% lead;
0~0.0005% cadmium;
the rest being zinc.

Another object of this invention can thus be achieved: the method for preparing said negative electrode body of dry cells comprises: zinc ingots of which zinc content is above 99.9955%, cadmium content≦ 0.0005% and lead content≦ 0.004% are used, and 0.0005~0.010% magnesium, 0.001~0.005% indium or 0.0005~0.005% tin are added; it is cast into zinc plate under casting temperature of 400°C~500°C, rolled, and punched into zinc particles with punch press, the punched zinc particles are given surface deburring and lubricant treatments, then the obtained zinc particles are punched into zinc can by a high-speed precision extruder.

Still another object of this invention can thus be achieved: the Zn/MnO₂ dry cell includes said negative electrode body of the present invention, the inner surface of which lies a coated paper, the outer of which are PVC sheath and iron shell, inside the coated paper are powdery bobbin and carbon rod, with the bobbin washer over the powdery bobbin. On the bottom side of the Zn/MnO₂ dry cell there are bottom cap and bottom seal, and on the upper side of it there are rubber plug, top cap and upper seal.

The zinc cans of the negative electrode bodies of the prior art Zn/MnO₂ dry cells contain lead and cadmium, whereas metal indium or tin is added in place of lead and cadmium to the zinc cans of the present invention. Compared with prior arts, an advantage of the Zn/MnO₂ dry cells of the present invention is that they are free of lead and cadmium. The preparing process without the addition of lead and cadmium does not lead to environmental pollution, and meets the requirements of environmental protection.

### DETAILED DESCRIPTION OF THE INVENTION

The negative electrode body of the present invention comprises (by weight):
0.0005~0.010% magnesium;
0.001~0.005% indium or 0.0005~0.005% tin;
0~0.004% lead;
0~0.0005% cadmium;
the rest being zinc.

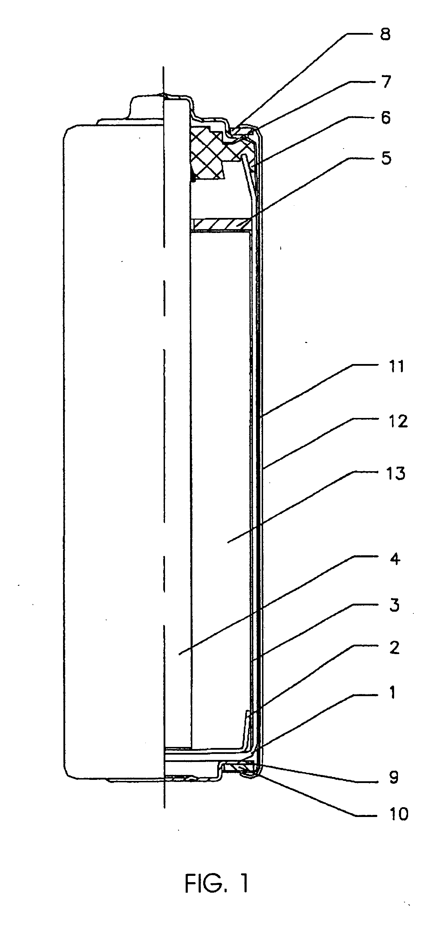

Referring to Fig. 1, the Zn/MnO₂ dry cell includes the negative electrode body of the present invention, (i.e. the zinc can 1), on the inner surface of which places a coated paper 3, the outer of which are polyvinyl chloride (PVC) sheath 11 and iron shell 12. Inside the coated paper 3 are powdery bobbin 13 and carbon rod 4, there is a paper cup 2 under the powdery bobbin 13 and carbon rod 4. There is bobbin washer 5 over the powdery bobbin 13. On the bottom side of the Zn/MnO₂ dry cell there are bottom cap 9 and bottom seal 10, and on the upper side of it there are rubber plug 6, top cap 7and upper seal 8.

The negative electrode body of the dry cell, i.e. the zinc can, can be prepared by conventional process.

At first, zinc particles are prepared. Zinc ingots of which zinc content is above 99.9955%(cadmium content≦ 0.0005% and lead content≦ 0.004%) are used; and 0.0005~0.010% magnesium, 0.001~0.005% indium or 0.0005~0.005% tin are added instead of lead and cadmium; it is cast into zinc plate under casting temperature of 400°C~500°C and rolled, then punched into zinc particles with required shape and size by punch press. It is necessary for the punched zinc particles to be given surface deburring and lubricant treatments.

By a high-speed precision extruder, the obtained zinc particles are punched into zinc can 1, then it is put on the production line, joined with coated paper 3, paper cup 2 and powdery bobbin 13. The bobbin washer 5 is put over the powdery bobbin, carbon rod 4 is inserted and rubber plug 6 is set, then polyvinyl chloride sheath 11 is enwrapped, the upper and bottom cap 7, 9 and bottom seal 10 are added, then the colored iron shell 12 and upper seal 8 are enwrapped, finally the dry cell is obtained after sealing.

### EMBODIMENT 1

The negative electrode body of the present invention comprises (by weight):
0.0015% magnesium;
0.001 % indium;
0.0018% lead;
0.0002% cadmium;
the rest being zinc.

The Zn/MnO₂ dry cell of this embodiment includes the negative electrode body of the present invention, i.e. the zinc can 1, on the inner surface of which places a coated paper 3, the outer of which are polyvinyl chloride (PVC) sheath 11 and iron shell 12. Inside the coated paper 3 are powdery bobbin 13 and carbon rod 4, and there is a paper cup 2 under the powdery bobbin 13 and carbon rod 4. There is bobbin washer 5 over the powdery bobbin 13. On the bottom side of the Zn/MnO₂ dry cell there are bottom cap 9 and bottom seal 10, and on the upper side of it there are rubber plug 6, top cap 7 and upper seal 8.

The negative electrode body of the dry cell, i.e. the zinc can 1, can be prepared by conventional process.

While casting the metal zinc for negative electrode body , 0.0015% magnesium and 0.001% indium are added instead of lead and cadmium; it is cast into zinc plate under melting temperature of 400°C~500°C and rolled, then punched into zinc particles with required shape and size by punch press. It is necessary for the punched zinc particles to be given surface deburring and lubricant treatments; the obtained zinc particles are punched into zinc can 1 by a high-speed precision extruder.

The zinc can 1 is put on the production line; joined with coated paper 3, paper cup 2 and powdery bobbin 13. The bobbin washer 5 is put over the powdery bobbin, carbon rod 4 is inserted and rubber plug 6 is set, then polyvinyl chloride sheath 11 is enwrapped, the upper and bottom cap 7, 9 and bottom seal 10 are added, then the colored iron shell 12 and upper seal 8 are enwrapped, thus the dry cell is obtained after sealing.

### EMBODIMENT 2

This embodiment is essentially the same as embodiment 1, except that the indium content of said composition is 0.002%, thus a Zn/MnO₂ dry cell with a negative electrode body of zinc can containing magnesium and 0.002% indium is obtained.

### EMBODIMENT 3

This embodiment is essentially the same as embodiment 1, except that the indium content of said composition is 0.005%, thus a Zn/MnO₂ dry cell with a negative electrode body of zinc can containing magnesium and 0.005% indium is obtained.

### EMBODIMENT 4

This embodiment is essentially the same as embodiment 1, except that 0.005% tin is used instead of said indium, thus a Zn/MnO₂ dry cell with a negative electrode body of zinc can containing magnesium and 0.005% tin is obtained.

### EMBODIMENT 5

This embodiment is essentially the same as embodiment 4, except that the tin content is 0.002%, thus a Zn/MnO₂ dry cell with a negative electrode body of zinc can containing magnesium and 0.002% tin is obtained.

### EMBODIMENT 6

This embodiment is essentially the same as embodiment 4, except that the tin content is 0.005%, thus a Zn/MnO₂ dry cell with a negative electrode body of zinc can containing magnesium and 0.005% tin is obtained.

The obtained zinc particles of embodiments 1 to 6 are tested with Atomic Absorption Spectrometer (AAS), and the results are listed below:

| Example | Amounts of addition (%) | | | | | Analyzed results of zinc particles (%) | | Analyzed results of the cells (%) | |
|---|---|---|---|---|---|---|---|---|---|
| | Lead (%) | Cadmium (%) | Magnesium (%) | Indium (%) | Tin (%) | Lead (%) | Cadmium (%) | Lead (%) | Cadmiu m (%) |
| embodiment 1 | 0 | 0 | 0.0015 | 0.001 | 0 | 0.0018 | 0.0002 | 0.0004 | 0.00006 |
| embodiment 2 | 0 | 0 | 0.0015 | 0.002 | 0 | 0.0018 | 0.0002 | 0.0004 | 0.00006 |
| embodiment 3 | 0 | 0 | 0.0015 | 0.005 | 0 | 0.0018 | 0.0002 | 0.0004 | 0.00006 |
| embodiment 4 | 0 | 0 | 0.0015 | 0 | 0.0005 | 0.0018 | 0.0002 | 0.0004 | 0.00006 |
| embodiment 5 | 0 | 0 | 0.0015 | 0 | 0.002 | 0.0018 | 0.0002 | 0.0004 | 0.00006 |
| embodiment 6 | 0 | 0 | 0.0015 | 0 | 0.005 | 0.0018 | 0.0002 | 0.0004 | 0.00006 |
| Comparative example (presently used) | 0.4 | 0.0005 | 0.0015 | 0 | 0 | 0.45 | 0.0006 | 0.071 | 0.00008 |

| | | | | | | | | | |
|---|---|---|---|---|---|---|---|---|---|
| Note: 98/101/EEC specification: Lead<0.4%, cadmium <0.025% | | | | | | | | | |

The surfaces of the zinc cans punched from zinc particles of embodiments 1 to 6 are equivalent to that of the Zn/MnO₂ dry cells now available (with the addition of 0.3-0.5% lead, 0.0005-0.004% cadmium).

The shelf performances of the R6 Zn/MnO₂ primary cells fabricated with the zinc plates obtained from embodiments 1 to 6 and the cells shelved at 60 °C and 90 % RH for 10 days are compared with the performance of the cell presently used (The negative electrode containing 0.3-0.5 % lead and 0.0005-0.004 % cadmium). (Evaluated at 20 °C):

| Example | Comparison of the shelf performances of the cells | | | |
|---|---|---|---|---|
| | Primary cells (within 15 days) | | Cells shelved at 60 °C and 90 % RH for 10 days | |
| | Open-circuit Voltage (V) | 5 Ω Load Voltage (V) | Open-circuit Voltage (V) | 5 Ω Load Voltage (V) |
| embodiment 1 | 1.70 | 1.55 | 1.59 | 1.46 |
| embodiment2 | 1.70 | 1.55 | 1.60 | 1.48 |
| embodiment 3 | 1.70 | 1.55 | 1.59 | 1.47 |
| embodiment4 | 1.70 | 1.55 | 1.59 | 1.46 |
| embodiment5 | 1.70 | 1.55 | 1.60 | 1.47 |
| embodiment 6 | 1.70 | 1.55 | 1.59 | 1.47 |
| Comparative Example (Presently used) | 1.70 | 1.55 | 1.61 | 1.47 |

From said embodiments and results, it can be seen that the results of embodiments 2, 3, 4 and 5 are better.

From above results, it can be seen that both the contents of lead and cadmium of the Zn/MnO₂ dry cells of the present invention are within the maximum allowable level of 98/101/EEC specifications. Lead content is under 0.004%, and cadmium content is under 0.0005%, both satisfying the requirement of environmental protection, and can be used as Pb-free and Cd-free Zn/MnO₂ battery.

Although the present invention has been fully described by way of examples, it is noted that the descriptions are not limitations of the invention, various changes of the examples with reference to the descriptions will be apparent to those skilled in the art, and they should be considered as being included within the scope and spirit of the appended claims.

## Claims

1. A negative electrode body for dry cells comprising (by weight):
0.0005~0.010% magnesium;
0.001~0.005% indium or 0.0005~0.005% tin;
0~0.004% lead;
0~0.0005% cadmium;
the rest being zinc.

2. The negative electrode body for dry cells according to claim 1, wherein the negative electrode body comprises (by weight):
0.0015 % magnesium;
0.001% indium;
0.0018% lead;
0.0002% cadmium;
the rest being zinc.

3. The negative electrode body for dry cells according to claim 1, wherein the negative electrode body comprises (by weight):
0.0015% magnesium;
0.002 % indium;
0.0018% lead;
0.0002% cadmium;
the rest being zinc.

4. The negative electrode body for dry cells according to claim 1, wherein the negative electrode body comprises (by weight):
0.0015% magnesium;
0.005% indium;
0.0018% lead;
0.0002% cadmium;
the rest being zinc.

5. The negative electrode body for dry cells according to claim 1, wherein the negative electrode body comprises (by weight):
0.0015 % magnesium;
0.0005% tin;
0.0018% lead;
0.0002% cadmium;
the rest being zinc.

6. The negative electrode body for dry cells according to claim 1, wherein the negative electrode body comprises (by weight):
0.0015 % magnesium;
0.002% tin;
0.0018% lead;
0.0002% cadmium;
the rest being zinc.

7. The negative electrode body for dry cells according to claim 1, wherein the negative electrode body comprises (by weight):
0.0015 % magnesium;
0.005% tin;
0.0018% lead;
0.0002% cadmium;
the rest being zinc.

8. A method of preparing the negative electrode body for dry cells of claim 1, comprising: using zinc ingots of which zinc content is above 99.9955%, cadmium content ≦ 0.0005% and lead content ≦ 0.004%, adding 0.0005~0.010% magnesium and 0.001~0.005% indium or 0.0005~0.005% tin; casting into zinc plate under casting temperature of 400°C~500°C, rolling, punching into zinc particles with punch press, giving the punched zinc particles surface deburring and lubricant treatments, then punching the obtained zinc particles into zinc can by a high-speed precision extruder.

9. A Zn/MnO₂ dry cell, including any one of said negative electrode body of claims 1 to 7, on the inner surface of which places coated paper, the outer of which are PVC sheath and iron shell, inside the coated paper being powdery bobbin and carbon rod, the bobbin washer being over the powdery bobbin, on the bottom side of the Zn/MnO₂ dry cell there being bottom cap and bottom seal, on the upper side of it there being rubber plug, top cap and upper seal.

10. The Zn/MnO₂ dry cell according to claim 9, wherein there is paper cup under said powdery bobbin and carbon rod.
